(19) Europäisches Patentamt / European Patent Office / Office européen des brevets

(11) **EP 3 131 959 B1**

(12) **EUROPEAN PATENT SPECIFICATION**

(45) Date of publication and mention
of the grant of the patent:
**18.07.2018 Bulletin 2018/29**

(51) Int Cl.:
*C08K 3/08* *(2006.01)*     *C08K 5/315* *(2006.01)*
*C08K 9/08* *(2006.01)*     *C08L 63/00* *(2006.01)*
*F25B 21/00* *(2006.01)*     *H01F 1/26* *(2006.01)*

(21) Application number: **15716788.3**

(22) Date of filing: **15.04.2015**

(86) International application number:
**PCT/EP2015/058158**

(87) International publication number:
**WO 2015/158768 (22.10.2015 Gazette 2015/42)**

(54) **EPOXY RESINS FOR USE IN SHAPED BODIES**

EPOXIDHARZE ZUR VERWENDUNG IN FORMKÖRPERN

RÉSINES ÉPOXY À UTILISER DANS DES CORPS FAÇONNÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2014 EP 14165182**

(43) Date of publication of application:
**22.02.2017 Bulletin 2017/08**

(73) Proprietor: **BASF SE
67056 Ludwigshafen am Rhein (DE)**

(72) Inventors:
• **CHARRAK, Monika
  67240 Bobenheim-Roxheim (DE)**

• **THOMAS, Hans-Josef
  41352 Korschenbroich (DE)**
• **YU, Miran
  67549 Worms (DE)**
• **SCHWIND, Markus
  2000 Antwerpen (BE)**

(74) Representative: **BASF IP Association
BASF SE
G-FLP-C006
67056 Ludwigshafen (DE)**

(56) References cited:
**EP-A2- 0 454 027     WO-A2-2011/117783
GB-A- 1 422 529     US-A1- 2011 042 608**

# EP 3 131 959 B1

**Description**

The invention relates to a shaped body comprising at least one solid material and a cured epoxy resin, to a process for preparing the shaped body comprising at least one solid material and a cured epoxy resin and to particles of a solid material which are coated by the epoxy resin.

The preparation of shaped bodies from solid materials like metals or metal compounds in form of particles with binders for different purposes is in principle known.

WO 2011/117783 A2 describes the preparation of shaped bodies of magnetic or magnetisable materials with epoxy-novolak resin by coating the particles of the magnetisable material with the epoxy-novolak resin, grinding the coated particles, compressing the particles in a mold to give the molding and curing the mold. The molds may be used in form of coil cores or coil formers e.g. in electromagnets.

WO 2009/133048 A1 describes a process for preparing an open-celled porous shaped body by introducing a magnetocaloric material into a polymeric binder, subjecting the resulting thermoplastic molding material to shaping, removing the binder and sintering the resulting green body, or coating the powder of the magnetocaloric material with a polymeric binder and subjecting the coated particles to a shaping by pressing, if appropriate with heat treatment. The porous shaped body is used to transfer heat to and from the magnetocaloric material by means of a heat transfer medium.

Magnetocaloric materials are known in principle and are described, for example, in WO 2004/068512 A1. In a material which exhibits a magnetocaloric effect (MCE), the alignment of randomly aligned magnetic moments by an external magnetic field leads to heating of the material. This heat can be removed from the magnetocaloric material to the surrounding atmosphere by a heat transfer. When the magnetic field is then switched off or removed, the magnetic moments revert back to a random arrangement, which leads to cooling of the material below ambient temperature. Such materials can be used in magnetic cooling techniques based on the magnetocaloric effect and may constitute an alternative to the known vapor circulation cooling methods and can also be exploited in heat pumps; see Nature, Vol. 415, January 10, 2002, pages 150 to 152. Typically, a heat transfer medium such as water is used for heat removal from the magnetocaloric material.

Vice versa, the magnetic phase transition in a magnetocaloric material can be induced by changing the temperature. The magnetic moments in the magnetocaloric material switch from random distribution to an aligned structure and back by changing the temperature. The varying magnetic field generated by the alternating alignment of the magnetic moments induced by the temperature change can be used for generating electricity.

An important factor for the efficiency of a magnetocaloric device is an effective and fast heat transfer to and away from the magnetocaloric material. Magnetocaloric materials are often arranged in so called regenerators or heat exchangers designed for the efficient transfer of heat from and to the magnetocaloric material. Different arrangements of the magnetocaloric materials in such regenerators are known, e.g. packed beds of magnetocaloric particles having open pores for the passage of a heat transfer fluid or stacked plates or shaped bodies which have continuous channels through which the heat exchange medium can flow.

All the MCE applications previously cited have a cyclic character, i.e. the magnetocaloric material runs through the magnetic phase transition frequently. Therefore, the magnetocaloric materials themselves and the shape and arrangement of the magnetocaloric materials in the regenerator should be chemically and mechanically stable, to provide long cycling life of the regenerator.

It is an object of the present invention to provide shaped bodies based on solid materials, in particular based on metals and metal compounds like magnetocaloric materials which are mechanically stable and have a long life time during cyclic applications. If the shaped bodies are based on magnetocaloric materials the shaped bodies should allow efficient transfer of heat from and to the magnetocaloric material and possess a high magnetocaloric density. Additionally it is an object of the present invention to provide a process for preparing shaped bodies based on solid materials which is cost effective, easily applicable and yields shaped bodies which are mechanically and chemically stable and possess a high density of the solid materials.

This object is achieved by a process of preparing such shaped bodies comprising the steps

(a) providing an epoxy resin composition containing
at least one epoxy resin having at least one epoxy group per molecule;
at least one curing agent selected from cyanoalkylated polyamines of formula (A)

$$A(NH\text{-}X\text{-}CN)_n \qquad (A),$$

wherein

A is a group selected from aryl, arylalkyl, alkyl, and cycloalkyl, wherein A does not contain a primary amino group, X is alkylene having 1 to 10 C-atoms, and

n ≥ 2; and
at least one accelerator selected from tertiary amines, imidazoles, guanidines, urea compounds, and Lewis acids;

(b) providing at least one solid material in form of particles;
(c) coating the particles at least partially with the epoxy resin composition;
(d) transferring the coated particles into a mold; and
(e) curing the epoxy resin.

This object is also achieved by a shaped body comprising at least one solid material and a cured epoxy resin wherein the cured epoxy resin is prepared from an epoxy resin composition containing
at least one epoxy resin having at least one epoxy group per molecule;
at least one curing agent selected from cyanoalkylated polyamines of formula (A)

$$A(NH-X-CN)_n \qquad (A),$$

wherein

A is a group selected from aryl, arylalkyl, alkyl, and cycloalkyl, wherein A does not contain a primary amino group
X is alkylene having 1 to 10 C-atoms, and
n ≥ 2; and
at least one accelerator selected from tertiary amines, imidazoles, guanidines, urea compounds, and Lewis acids,

wherein the shaped body has a porosity of 20 to 80 % based on the total volume of the shaped body. The object of the invention is also achieved by the use of the epoxy resin composition as described above for the preparation of the shaped bodies and by coated particles for the preparation of the shaped bodies wherein the coated particles comprise a core of the solid material which is at least partially coated with the epoxy resin composition.

The particular epoxy resin composition used according to the present invention is a latent curing epoxy system, which yields shaped bodies having high mechanical stability. The epoxy resin composition allows preparing coated particles which can be stored for weeks before they are cured, e.g. during the preparation of shaped bodies. The coated particles can be used for the preparation of shaped bodies without the addition of supplemental epoxy resin. Shaped bodies having a high ratio of solid material to cured epoxy resin but nevertheless showing high mechanical stability can be obtained. Additionally the use of the coated particles for the preparation of porous shaped bodies is advantageous, since clogging of the particles and blocking of open space between the particles is reduced or even completely avoided. The open space between the particles in the shaped body often constitutes a main path for the heat transfer medium later in the regenerator. The adjustment of the porosity is facilitated, too. The use of the latent epoxy resin composition in the present process ensures that the epoxy resin composition present as coating of the particles has still sufficient ability to react chemically with epoxy resin composition present in the coating of neighboring particles at the contacting areas of the particles during the curing. This leads to higher bonding strength between individual particles and in turn to higher mechanical stability of the shaped bodies. Additionally the coating may constitute a protecting layer between the magnetocaloric material and the heat transfer medium by improving the chemical stability of the magnetocaloric material.

In the following the present invention is described in detail.

The epoxy resin composition provided in step (a) of the process for preparing the shaped body according to the present invention contains at least one epoxy resin having at least one epoxy group per molecule. Epoxy resins in general are described e.g. in Ullmann's Encyclopedia of Technical Chemistry 2005 Wiley-VCH Verlag, Weinheim (doi: 10.1002/14356007.a09 547.pub2). Preferably the epoxy resin has more than one epoxide group per molecule in average, more preferred the epoxy resin has at least two epoxy group per molecule in average, even more preferred 2 to 10, most preferred 2 to 6 and in particular preferred 2 to 4 epoxy groups per molecule in average. The epoxy groups may be generated or introduced by reaction of the respective educts with epichlorohydrin or glycidyl(meth)acrylate or by oxidation of suitable unsaturated compounds. Epichlorohydrin reacts with alcohol groups yielding glycidylethers.

The epoxy resins used in the epoxy resin composition may be saturated or unsaturated, aliphatic, cycloaliphatic, aromatic or heterocyclic, and may also contain hydroxyl groups. They may additionally include substituents which under the conditions of mixing and of reaction do not give rise to disruptive side reactions, examples being alkyl or aryl substituents, ether moieties and the like. These epoxide resins are preferably polyglycidyl ethers based on polyhydric, preferably dihydric, alcohols; phenols and hydrogenation products of these phenols; and/or on novolaks (reaction products of monohydric or polyhydric phenols with aldehydes, especially formaldehyde in the presence of acidic catalysts).

Aliphatic epoxy resins may be epoxidized polyalkylene oxide ethers and esters. In the context of the present invention, epoxidized polyalkylene oxide ethers are understood to be compounds which can be obtained by converting the two terminal OH groups of polyalkylene oxide into oxirane groups, for example by reaction with epichlorohydrin. The polyalkylene oxide used may have an average molecular weight of 80 to 3,000 and may be produced by starting the polymerization of the respective alkylene oxide(s) with a $C_2$ to $C_{18}$ alkylene diol, as known to the expert. The alkylene oxide is usually selected from $C_1$ to $C_6$ alkylene oxides thereof, preferably from $C_2$ to $C_3$ alkylene oxide and most preferred from ethylene oxide and 1,2-propylene oxide. The polyalkylene oxide may be a homopolymer, a random copolymer or a block copolymer of different alkylene oxides.

Low molecular polyglycidyl ethers of polyhydric alcohols are also suitable as epoxy resins. Examples of such polyhydric alcohols include ethylene glycol, diethylene glycol, triethylene glycol, 1,2-propylene glycol, polyoxy-propylene glycol (containing 2 to 20 propylene glycol units), 1,3-propylene glycol, 1,4-butylene glycol, 1,5-pentanediol, 1,6-hexanediol, 1,2,6-hexanetriol, glycerol, isosorbide, and 2,2-bis(4-hydroxycyclohexyl)-2,2-propane.

Aromatic epoxy resins may be selected from the group of bisphenol A epoxides and bisphenol F epoxides. Bisphenol A epoxides may be obtained by reacting bisphenol A with epichlorohydrin and/or polymerizing it by further reaction with bisphenol A. Accordingly, these compounds are also known as bisphenol A diglycidyl ethers, generally as bisphenol A epoxy resins. The molecular weights of the bisphenol A epoxides used are preferably in the range from 300 to 8 000 g/mol. Bisphenol F epoxides may be obtained by reacting bisphenol F with epichlorohydrin or of similar epoxy compounds and/or polymerizing it by further reaction with bisphenol F. Accordingly, these compounds are also known as bisphenol F diglycidyl ethers or, generally, as bisphenol F epoxy resins. The molecular weights of the bisphenol F epoxides used are preferably in the range from 300 to 3 000 g/mol.

Aromatic epoxy resins may also be selected from the products of the reaction of epichlorohydrin or of similar epoxy compounds with phenolic compounds like phenol, cresols, resorcinol, hydroquinone, phenol-aldehyde adducts like phenolformaldehyde resins, in particular novolaks. Suited epoxidized aromatic compounds are also 4,4'-methylenebis[N,N-bis(2,3-epoxypropyl)aniline] (TGDMA) 4,4'-dihydroxydiphenylcyclohexane, 4,4'-dihydroxy-3,3-dimethyldiphenylpropane, 4,4'-dihydroxybiphenyl, 4,4'-dihydroxybenzophenol, 1,1-bis(4-hydroxyphenyl)ethane, 1,1-bis(4-hydroxyphenyl)isobutane, bis(4-hydroxyphenyl)methane, bis(4-hydroxy-phenyl)ether, bis(4-hydroxyphenyl) sulfone.

Cycloaliphatic epoxy resins may be selected from hydrogenated bisphenol A epoxides and hydrogenated bisphenol F epoxides.

It is also possible to use epoxydized polycarboxylic acids, which are obtained by the reaction of epichlorohydrin or of similar epoxy compounds with an aliphatic, cycloaliphatic or aromatic polycarboxylic acid, such as oxalic acid, succinic acid, adipic acid, glutaric acid, phthalic acid, terephthalic acid, hexahydrophthalic acid, 2,6-naphthalenedicarboxylic acid, and dimerized linolen-ic acid. Examples are diglycidyl adipate, diglycidyl phthalate, and diglycidyl hexahydrophthalate.

Additional epoxy resins suitable according to the present invention are brominated bisphenol A epoxides and fluorinated derivatives of the above described epoxides.

Preferred epoxy resins according to the present invention are bisphenol A epoxides, bisphenol F epoxides, hydrogenated bisphenol A epoxides, and hydrogenated bisphenol F epoxides.

The epoxide resin composition provided in step (a) may contain one epoxy resin or a mixture of two or more different epoxy resins. The epoxide equivalent weights (EEW, in g/eq) of the epoxide resins used are preferably between 100 and 2000, in particular between 170 and 500. The epoxide equivalent weight of a substance is defined as the amount of the substance (in grams) that contains 1 mol of oxirane rings. It is possible to use epoxy resins which are solid at 20 °C and epoxy resins liquid at 20 °C. Liquid epoxy resins are in particular those which at 20 °C have a Brookfield viscosity in the range from 500 to 20 000 mPas.

Usually the epoxy resin composition provided in step (a) contains at least 1 wt.-%, preferably at least 5 wt.-% epoxy resin, based on the total weight of the epoxy resin composition. These lower limits are in particular preferred in the case that the epoxy resin composition contains one or more solvents which are removed before step (d) as described below. In the case the epoxy resin composition does not contain a solvent which is removed before step (d) the epoxy resin composition provided in step (a) preferably contains at least 30 wt.-% epoxy resin and more preferred at least 50 wt.-% epoxy resin, based on the total weight of the epoxy resin composition.

The epoxy resin composition provided in step (a) of the process for the preparation of a shaped body according to the present invention contains at least one curing agent selected from cyanoalkylated polyamines of formula (A)

$$A(NH\text{-}X\text{-}CN)_n \qquad (A).$$

A is substituted n-times by (NH-X-CN) and is selected from aryl, arylalkyl, alkyl or cycloalkyl, preferably A is aralkyl, alkyl or cycloalkyl, wherein A does not contain a primary amino group. Preferably A does not contain any hetero atom with the exception that A may contain one or more heteroatoms selected from oxygen present in the form of an ether group, an ester group, a keto group and/or an alcohol group; and/or one or more heteroatoms selected from nitrogen present as secondary amine and/or tertiary amine. Hetero atoms as used herein are all atoms besides C and H.

X is alkylene having 1 to 10 C-atoms, preferably 1 to 4 C-atoms, and more preferred 1 to 2 C-atoms. "Alkylene" as used herein may be linear or branched alkylenes, preferred are linear alkylenes, and may be saturated or unsaturated alkylenes, preferred are saturated alkylenes.

$n \geq 2$, preferred n is 2 or 3, and more preferred n is 2.

According to one embodiment the cyanoalkylated polyamines of formula (A) have a melting point below 60 °C, more preferred below 40 °C and can be mixed with bisphenol-A diglycidylether having an EEW of about 182 g (e.g. Epilox® A19-03 (Leuna Harze) in the liquid state without phase separation (i) or the cyanoalkylated polyamines of formula (A) can be solved completely in bisphenol-A diglycidylether having an EEW of about 182 g (e.g. Epilox® A19-03 (Leuna Harze) at a temperature below 60 °C, preferably below 40 °C and at a concentration of at least 20 wt.-%, preferred of at least 30 wt.-% and more preferred of at least 40 wt.-%.

The cyanoalkylated polyamines of formula (A) are used as curing agent in the epoxy resin composition used according to the present invention. "Curing agent" as used herein means a chemical compound having a functionality of at least three, i.e. one molecule of the curing agent is able to react with at least three epoxide groups per molecule and reacts chemically irreversible with the epoxide resin during the curing of the epoxide resin. The curing agent is thereby incorporated into the network of the cured epoxide resin.

According to the invention cyanoalkylated polyamines of formula (A) are preferred wherein the group A is derived from polyamines $A(NH_2)_n$, i.e. the group A of the cyanoalkylated polyamines of formula (A) equals the remaining group A of the polyamines after deletion of the $NH_2$ groups, wherein the polymamines $A(NH_2)_n$ are selected from 1,12-diaminododecane, 1,10-diaminodecane, 1,2-diaminocyclohexane, 1,2-propanediamine, 1,3-bis(aminomethyl)cyclohexane, 1,3-propanediamine, 1-methyl-2,4-diaminocyclohexane, 2,2'-oxybis(ethylamine), 3,3'-dimethyl-4,4'-diaminodicyclohexylmethane, 4,4'-methylenedianiline, 4-ethyl-4-methylamino-1-octylamine, diethylenetriamine, ethylenediamine, hexamethylenediamine, isophoronediamine, a mixture of 4-methylcyclohexane-1,3-diamine and 2-methylcyclohexane-1,3-diamine (MDACH), menthenediamine, xylylenediamine, neopentanediamine, norbornanediamine, octanemethylenediamine, 4,8-diaminotricyclo[5.2.1.0]decane, tolylenediamine, triethylenetetramine, trimethylhexamethylenediamine, and polyalkoxypolyamines. Polyalkoxypolyamines may be selected from the group of 3,6-dioxa-1,8-octanediamine, 4,7,10-trioxa-1,13-tridecanediamine, 4,7-dioxa-1,10-decanediamine, 4,9-dioxa-1,12-docecanediamine, polyetheramines based on triethylene glycol with average molecular weight 148, difunctional, primary polyetheramine produced via amination of a propylene-oxide-grafted ethylene glycol with average molecular weight 176, difunctional, primary polyetheramine based on propylene oxide with average molecular weight 4000, difunctional, primary polyetheramine produced via amination of a propylene-oxide-grafted polyethylene glycol with average molecular weight 2000, aliphatic polyetheramine based on propylene-oxide-grafted polyethylene glycol with average molecular weight 900, aliphatic polyetheramine based on propylene-oxide-grafted polyethylene glycol with average molecular weight 600, difunctional, primary polyetheramine produced via amination of a propylene-oxide-grafted diethylene glycol with average molecular weight 220, aliphatic polyetheramine based on a copolymer of poly(tetramethylene ether glycol) and polypropylene glycol with average molecular weight 1000, aliphatic polyetheramine based on a copolymer of poly(tetramethylene ether glycol) and polypropylene glycol with average molecular weight 1900, aliphatic polyetheramine based on a copolymer of poly(tetramethylene ether glycol) and polypropylene glycol with average molecular weight 1400, polyethertriamine based on butylene-oxide-grafted at least trihydric alcohol with average molecular weight 400, aliphatic polyetheramine produced via amination of butylene-oxide-grafted alcohols with average molecular weight 219 (Jeffamine®XTJ 568 (XTJ 568)), polyetheramine based on pentaerythritol and propylene oxide with average molecular weight 600, difunctional, primary polyetheramine based on polypropylene glycol with average molecular weight 2000, difunctional, primary polyetheramine based on polypropylene glycol with average molecular weight 230 (D 230), difunctional, primary polyetheramine based on polypropylene glycol with average molecular weight 400 (D 400), trifunctional, primary polyetheramine produced via reaction of propylene oxide with trimethylolpropane followed by amination of the terminal OH groups with average molecular weight 403 (T403), trifunctional, primary polyetheramine produced via reaction of propylene oxide with glycerol followed by amination of the terminal OH groups with average molecular weight 5000 (T 5000), and a polyetheramine with average molecular weight 400 produced via amination of polyTHF which has average molecular weight 250.

More preferred are cyanoalkylated polyamines of formula (A) wherein group A is derived from the polyamines $A(NH_2)_n$ selected from the group consisting of polyetheramine D230 (D230), polyetheramine D 400, polyetheramine T 403, polyetheramine T 5000, Jeffamine®XTJ 568 (XTJ 568), isophorone diamine (IPDA) and a mixture of 4-methylcyclohexane-1,3-diamine and 2-methylcyclohexane-1,3-diamine (MDACH), most preferred are cyanoalkylated polyamines of formula (A) wherein group A is derived from the polyamines $A(NH_2)_n$ selected from isophorone diamine (IPDA) and polyetheramine D230 (D230).

The cyanoalkyl group present in the cyanoalkyated amino group containing compounds has a functionality of three in respect to the curing of the epoxy resin, i.e. one cyanoalkyl group reacts with three epoxy groups. One cyanoalkylated amino group (NH-X-CN) of a compound of formula (A) has a functionality of 4, since the NH group contributes with the functionality 1, with the proviso that X does not contain any additional functional group capable of reacting with an epoxy group.

The cyanoalkylated polyamines of formula (A) may be prepared by cyanoalkylation of the corresponding polyamines $A(NH_2)_n$, as e.g. described in WO 2010/053649 A or DE 2460305 A.

Preferably the cyanoalkylated polyamines of formula (A) are the product of the cyanoalkylation of a polyamine $A(NH_2)_n$ with an acrylonitrile $CR_2=CR-C=N$ or a cyanohydrin $CR_2OH-C\equiv N$, wherein each R independently from each other is H or $C_1$ to $C_4$ alkyl, preferably H or $C_1$ to $C_2$ alkyl, most preferred H, and wherein the total number of C-atoms in the acrylonitrile or cyano-hydrine is at most 11, preferred at most 5 and more preferred at most 3.

The cyanoalkylated polyamines of formula (A) are used in combination with one or more accelerators selected from tertiary amines, imidazoles, guanidines, urea compounds, and Lewis acids as latent curing agents. Latent curing agents as used herein mean compounds or mixtures thereof, which do not react significantly with the epoxy resin at 25 °C at normal pressure, but react at elevated temperature (e.g. at 75 °C) with the epoxy resin forming a network. A non-significant reaction of the latent curing agent(s) with the epoxy resin means a reaction, wherein the viscosity of an epoxy resin composition containing bisphenol A diglycidylether (EEW of about 182 g) and latent curing agent(s) in stoichiometric ratio during for 24 h at 25 °C at normal pressure doubles at maximum. A network forming reaction of latent curing agent(s) as used herein is a reaction of an epoxy resin composition containing bisphenol A diglycidylether (EEW of about 182 g) and latent curing agent(s) in stoichiometric ratio at 75 °C having a gel time (according to DIN 16945 and ASTM D4473) of at maximum 24 h. Curing agent(s) reacting significantly with the epoxy resin at 25 °C yield less stable epoxy resin composition.

The gel time according to DIN 16945 is an indication of the time span between addition of curing agent to the epoxy resin composition and the transition of the epoxy resin composition from the liquid state into the gel state. Since temperature plays an important role, the gel time is determined for a pre-determined temperature in each case. By means of dynamic-mechanic methods, in particular rotational rheology, small samples volumes may be investigated quasiisothermally. According to ASTM D 4473 the intersection of storage modulus G' and loss modulus G" is the gel point. At this intersection point the dissipation factor tan d is 1. The time span between addition of curing agent(s) to the epoxy resin composition and achievement of the gel point is the gel time. The gel time determined accordingly can be considered as a measure of the curing velocity.

Preferably the at least one accelerator is selected from tertiary amines, imidazoles, guanidines, and urea compounds, and more preferred it is selected from urea compounds.

Examples of tertiary amines suited according to the invention are N,N-dimethylbenzylamine, 2,4,6-tris(dimethylaminomethyl)phenol (DMP 30), 1,4-diazabicyclo[2.2.2]octane (DABCO), 1,8-diazabicyclo[5.4.0]undec-7-ene (DBU), S-triazine (Lupragen N 600), bis(2-dimethylaminoethyl) ether (Lupragen N 206), pentamethyldiethylenetriamine (Lupragen N 301), trimethylaminoethylethanolamine (Lupragen N 400), tetramethyl-1,6-hexanediamine (Lupragen N 500), aminoethylmorpholine, aminopropylmorpholine, aminoethylethyleneurea or N-alkyl-substituted piperidine derivatives.

"Imidazoles" according to the invention are organic compounds containing as common structural element one or more 5-membered aromatic heterocycles wherein each heterocycle has two N-atoms in non-adjacent positions. Examples of imidazoles suited according to the invention such as, for example, 1-methylimidazole, 2-methylimidazole, N-butylimidazole, benzimidazole, N-$C_{1-12}$-alkylimidazoles, N-arylimidazoles, 2,4-ethylmethylimidazole, 2-phenylimidazole, 1-cyanoethylimidazole or N-aminopropylimidazole,
"Guanidines" according to the invention are organic compounds containing as common structural element one or more N-C(=N)-N groups. Examples of guanidines suited according to the invention are guanidine itself or its derivatives such as, for example, methylguanidine, dimethylguanidine, trimethylguanidine, tetramethylguanidine (TMG), methyl isobiguanide, dimethyl isobiguanide, tetramethyl isobiguanide, hexamethyl isobiguanide, and heptamethyl isobiguanide.

"Urea compounds" according to the invention are organic compounds containing as common structural element one or more N-C(=O)-N groups. Examples of urea compounds suited according to the invention are urea itself and its derivatives such as, for example, 3-(4-chlorophenyl)-1,1-dimethylurea (monuron), 3-phenyl-1,1-dimethylurea (fenuron), 3-(3,4-dichlorophenyl)-1,1-dimethylurea (diuron), 3-(3-chloro-4-methylphenyl)-1,1-dimethylurea (chlorotoluron), N,N"-(4-methyl-m-phenylen)bis[N',N'-dimethylurea], N,N"-(methyl-m-phenylen)bis[N',N'-dimethylurea], and tolyl-2,4-bis-N,N-dimethylcarbamide (Amicure UR2T). The isomers N,N"-(4-methyl-m-phenylen)bis[N',N'-dimethylurea] and N,N"-(methyl-m-phenylen)bis[N',N'-dimethylurea] are normally used as mixture (Dyhard UR500). Particularly preferred accelerators are N,N"-(4-methyl-m-phenylen)bis[N',N'-dimethylurea], N,N"-(methyl-m-phenylen)bis[N',N'-dimethylurea] and a mixture thereof.

Lewis acids are electrophilic electron-pair acceptors. Examples of Lewis acids suited according to the invention are for example electron-deficient compounds like trivalent boron compounds (e.g. $BF_3$ adducts and borane adducts) or trivalent aluminium compounds, halids having free coordination valences like $SiCl_4$ and $PF_5$ or complex forming metal cation compounds like tin fluoride. According to the present invention Lewis acids selected from $BF_3$ adducts and tin fluoride.

Preferably the at least one accelerator is selected from tertiary amines, imidazoles, guanidines, urea compounds, and Lewis acids has a melting point below 60 °C, more preferred below 40 °C and can be mixed with bisphenol-A diglycidylether having an EEW of about 182 g (e.g. Epilox® A19-03 (Leuna Harze) in the liquid state without phase separation (i) or the at least one accelerator selected from tertiary amines, imidazoles, guanidines, urea compounds, and Lewis acids can be solved completely in bisphenol-A diglycidylether having an EEW of about 182 g (e.g. Epilox® A19-03 (Leuna Harze) at a temperature below 60 °C, preferably below 40 °C and at a concentration of at least 2 wt.-%, preferred of at least 5 wt.-% and more preferred of at least 10 wt.-%.

Preferably the at least one accelerator selected from tertiary amines, imidazoles, guanidines, urea compounds, and Lewis acids is present in the epoxy resin composition in an amount in the range of 0.1 to 30 wt.-%, more preferred in the range of 1 to 25 wt.-% and in particular preferred in an amount in the range of 3 to 20 wt.-%, based on the total weight of the at least one cyanoalkylated polyamine of formula (A).

In particular preferred the epoxy resin composition contains as cyanoalkylated polyamine of formula (A) cyanoethylated isophorone diamine and as accelerator N,N''-(4-methyl-m-phenylen)bis[N',N'-dimethylurea], N,N''-(methyl-m-phenylen)bis[N',N'-dimethylurea] or a mixture thereof.

The epoxy resin composition may contain additional curing agents known by the person skilled in the art like amino group containing curing agents. Such amino group containing curing agents are not comprised in the cyanoalkylated polyamines of formula (A). The amino group containing curing agents contain at least one primary amino group and have a functionality in respect to NH and $NH_2$ of at least 3. Preferably the epoxy resin composition does not contain more than 50 wt.-% of amino group containing curing agents, more preferred not more than 20 wt.-% amino group containing curing agents, even more preferred not more than 15 wt.-% and most preferred not more than 10 wt.-% amino group containing curing agents, based on the weight of the cyanoalkylated polyamines of formula (A).

In general the amount of the curing agent(s) contained in the epoxy resin composition depends on the respective epoxy resin composition and may be adjusted by the person skilled in the art. Usually the one or more curing agent(s) and the epoxy resin are approximately used in stoichiometric ratio, wherein the stoichomteric ratio is calculated on the basis of the functionalities present in the epoxy resin and the curing agent(s), respectively. If a reactive diluent carrying epoxide groups is present, the epoxide groups of the reactive diluent have to be added to the epoxy resin for the calculation of the functionality. The functionality of an epoxy group is one as well as the functionality of a NH-group, the functionality of a $NH_2$-group is 2 and the functionality of the nitrile group in a cyanoalkylated amine containing compound is three. For example, the curing agent cyanoalkylated isophorone contains two nitrile groups and two NH-groups resulting in a functionality of 8. The quantity of curing agent equivalents is the sum of the respective functionalities multiplied by the respective molar amount of the cyanoalkylated polyamines and optionally present additional curing agents. The ratio of curing agent equivalents is the amount of curing agent equivalents divided by the molar quantity of the epoxide groups in the epoxy resin. Preferably epoxy resin and curing agent(s) are present in a ratio of curing agent equivalents in the range of 0.5 to 1.5, more preferred in the range of 0.7 to 1.3.

A particular preferred latent curing epoxy resin composition contains bisphenol-A-based epoxy resin, cyanoethylated isophorondiamine and N,N''-(4-methyl-m-phenylen)bis[N',N'-dimethylurea], N,N''-(methyl-m-phenylen)bis[N',N'-dimethylurea] or a mixture thereof.

The epoxy resin composition provided in step (a) may contain further additives selected from catalysts; accelerators; curing agents; lubricants; reactive diluents; corrosion inhibitors such as metal additives which may protect the material or form a sacrificial anodic protection or ceramic or oxide additives which may prevent penetration of oxidizing species; agents for increasing heat conductivity such as graphite, carbon nanofibers, active carbon, aluminum oxide and other ceramic particles or nanoparticles, metal particles or nanoparticles; adhesion promoters; and stabilizers.

Some of the additives like corrosion inhibitors and agents for increasing heat conductivity are added to improve the properties of the shaped bodies obtained by the process; other additives are added to improve the properties of the epoxy resin composition like catalysts and accelerators.

Reactive diluents are compounds which reduce the initial viscosity of the epoxy resin composition and during the course of curing of the epoxy resin composition enter into chemical bonding with the developing network made of epoxy resin and curing agent. Preferred reactive diluents according to the present invention are low molecular organic, preferably aliphatic compounds having one or two epoxide groups, preferred two epoxide groups, and cyclic carbonates, in particular cyclic carbonates containing 1 to 10 C-atoms. Examples of reactive diluents are ethylene carbonate, vinylene carbonate, propylene carbonate, glycerol carbonate, 1,4-butanediol bisglycidyl ether, 1,6-hexanediol bisglycidyl ether, glycidyl neodecanoate, glycidyl versatate, 2-ethylhexyl glycidyl ether, neopentyl glycol diglycidyl ether, p-tert-butyl glycidyl ether, butyl glycidyl ether, C8-C10-alkyl glycidyl ether, C12-C14-alkyl glycidyl ether, nonylphenyl glycidyl ether, p-tert-butylphenyl glycidyl ether, phenyl glycidyl ether, o-cresyl glycidyl ether, polyoxypropylene glycol diglycidyl ether, trimethylolpropane triglycidyl ether, glycerol triglycidyl ether, triglycidylpara-aminophenol, divinylbenzyl dioxide, and dicyclopentadiene diepoxide. Particular preference is given to those selected from the group consisting of 1,4-butanediol bisglycidyl ether, 1,6-hexanediol bisglycidyl ether, 2-ethylhexyl glycidyl ether, C8-C10-alkyl glycidyl ether, C12-C14-alkyl glycidyl ether, neopentyl glycol diglycidyl ether, p-tert-butyl glycidyl ether, butyl glycidyl ether, nonylphenyl glycidyl ether, p-tert-butylphenyl glycidyl ether, phenyl glycidyl ether, o-cresyl glycidyl ether, trimethylolpropane triglycidyl ether, glycerol triglycidyl ether, divinylbenzyl dioxide, and dicyclopentadiene diepoxide. They are in particular those selected from the group consisting of 1,4-butanediol bisglycidyl ether, C8-C10-alkyl monoglycidyl ether, C12-C14-alkyl monoglycidyl ether, 1,6-hexanediol bisglycidyl ether, neopentyl glycol diglycidyl ether, trimethylolpropane triglycidyl ether, glycerol triglycidyl ether, divinylbenzene dioxide, and dicyclopentadiene diepoxide. It is possible to use one or more reactive diluents. If one or more reactive diluent is contained, the reactive diluents make up a proportion of up to 40% by weight, particularly preferably up to 30% by weight, in particular from 1 to 20% by weight, based on the total weight of epoxy resin composition.

The epoxy resin composition provided in step (a) may contain at least one solvent which is removed between steps (c) and (d). Solvent(s) may be added to adjust the viscosity of the epoxy resin composition and/or to allow thin coating of the particles. Suitable solvents are all protic and aprotic solvent which are inert to the used compounds under the described conditions, preferably acetone, methoxypropylacetat, dichloromethane, chloroform, ethanol, methanol, isopropanol, tert-butyl methyl ether, and ethyl acetate. The solvents may be removed at room temperature or at elevated temperatures, as long as the temperature is selected such that the crosslinking reaction of the resin and the curing agent is not initiated. It is also possible to evaporate the solvents at reduced pressure or to apply elevated temperatures and reduced pressure. In general the solvent content of the epoxy resin composition is 0 to 99.9 wt.-%, based on the total weight of the epoxy resin composition, preferred the solvent content is 0 to 10 wt.-% or 50 to 95 wt.-%, based on the total weight of the epoxy resin composition.

According to step (b) of the process according to the invention at least one solid material in form of particles is provided. It is possible to use any solid material which can be used in form of particles, preferably the solid material is selected from metals and metal compounds like pure metals, metal alloys, metal non-metal compounds like oxides etc., e.g. iron, cobalt, nickel, molybdenum, manganese, etc., NiCoFe, NiCuCo, AlNi, AlNiCo, FeCrV, FeCo, FeNi, $MnAlCu_2$, SmCo, $Nd_2Fe_{14}B$, FeSi, FeSiAl, and carbonyl iron compounds. More preferred the solid material is selected from magnetocaloric materials.

It is possible to use any magnetocaloric material available in particulate form in the process according to the invention. Magnetocaloric materials and their preparation are known per se, suitable magnetocaloric materials are for example

(1) compounds of the general formula (I)

$$(A_yB_{1-y})_{2+d}C_wD_xE_z \qquad (I)$$

wherein

A: is Mn or Co,
B: is Fe, Cr or Ni,
C, D and E: at least two of C, D and E are different, have a non-vanishing concentration and are selected from P, B, Se, Ge, Ga, Si, Sn, N, As and Sb, where at least one of C, D and E is Ge, As or Si,
d: is a number in the range from -0.1 to 0.1,
w, x, y, z: are numbers in the range from 0 to 1, where w + x + z = 1;

(2) La- and Fe-based compounds of the general formula (II)

$$(La_{1-a}M_a)(Fe_{1-b-c}T_bY_c)_{13-d}H_e \qquad (II)$$

wherein

M is selected from Ce, Pr, and Nd,
T is selected from Co, Ni, Mn, and Cr,
Y is selected from Si, Al, As, Ga, Ge, Sn, and Sb;
$0 \le a \le 0.9$,
$0 \le b \le 0.2$,
$0.05 \le c \le 0.2$,
$-1 \le d \le +1$, and
$0 \le e \le 3$;

(3) Heusler alloys of the $MnT_tT_p$ type where $T_t$ is a transition metal and $T_p$ is a p-doping metal having an electron count per atom (e/a) in the range from 7 to 8.5;

(4) Gd- and Si-based compounds of the general formula (III)

$$Gd_5(Si_xGe_{1-x})_4 \qquad (III)$$

wherein x is a number from 0.2 to 1;

(5) $Fe_2P$-based compounds;

(6) manganites of the perovskite type;

(7) compounds which comprise rare earth elements and are of the general formulae (IV) and (V)

$$Tb_5(Si_{4-x}Ge_x) \qquad (IV)$$

where x: is 0, 1, 2, 3, 4;

$$XTiGe \qquad (V)$$

where X: is Dy, Ho, Tm; and

(8) Mn- and Sb- or As-based compounds of the general formulae (VI), (VII), (VIII), and (IX)

$$Mn_{2-x}Z_xSb \qquad (VI)$$

$$Mn_2Z_xSb_{1-x} \qquad (VII)$$

where

    Z: is Cr, Cu, Zn, Co, V, As, Ge,
    x: is from 0.01 to 0.5,

$$Mn_{2-x}Z_xAs \qquad (VIII)$$

and

$$Mn_2Z_xAs_{1-x} \qquad (IX)$$

wherein

    Z: is Cr, Cu, Zn, Co, V, Sb, Ge,
    x: is from 0.01 to 0.5.

Preference is given in accordance with the invention to the magnetocaloric materials selected from compounds (1), (2) and (3), and also (5), even more preferred the magnetocaloric materials selected from compounds (1) and (2), in particular preferred are compounds (1).

Materials particularly suitable in accordance with the invention are described, for example, in WO 2004/068512 A1, Rare Metals, Vol. 25, 2006, pages 544 to 549, J. Appl. Phys. 99,08Q107 (2006), Nature, Vol. 415, January 10, 2002, pages 150 to 152 and Physica B 327 (2003), pages 431 to 437.

Magnetocaloric materials of general formula (I) are described e.g. in WO 2004/068512 A1, WO 2003/012801 A1, WO 2011/111004 and WO 2011/083446. Preference is given to magnetocaloric materials selected from at least quaternary compounds of the general formula (I) wherein at least two of C, D and E are different and C, D and E are selected from P, As, Ge, Si, B, Sn and Ga, especially preferred are $(Mn_yFe_{1-y})_{2+d}P_wD_xE_z$, wherein D and E same or different and are selected from As, Ge, Si and B.

La- and Fe-based compounds of the general formulae (II) are e.g. described in US 7,063,754

B2 and US 2010/047527 A1 and include $La(Fe_{0.90}Si_{0.10})_{13}$, $La(Fe_{0.89}Si_{0.11})_{13}$, $La(Fe_{0.880}Si_{0.120})_{13}$, $La(Fe_{0.877}Si_{0.123})_{13}$, $LaFe_{11.8}Si_{1.2}$, $La(Fe_{0.88}Si_{0.12})_{13}H_{0.5}$, $La(Fe_{0.88}Si_{0.12})_{13}H_{1.0}$, $LaFe_{11.7}Si_{1.3}H_{1.1}$, $LaFe_{11.57}Si_{1.43}H_{1.3}$, $La(Fe_{0.88}Si_{0.12})H_{1.5}$, $LaFe_{11.2}Co_{0.7}Si_{1.1}$, $LaFe_{11.5}Al_{1.5}C_{0.1}$, $LaFe_{11.5}Al_{1.5}C_{0.2}$, $LaFe_{11.5}Al_{1.5}C_{0.4}$, $LaFe_{11.5}Al_{1.5}Co_{0.5}$, $La(Fe_{0.94}Co_{0.06})_{11.83}Al_{1.17}$, $La(Fe_{0.92}Co_{0.08})_{11.83}Al_{1.17}$.

Heusler alloys of the $MnT_tT_p$ type where $T_t$ is a transition metal and $T_p$ is a p-doping metal having an electron count per atom e/a in the range from 7 to 8.5 are described in Krenke et al., Physical review B72, 014412 (2005). Heusler alloys suitable in accordance with the invention are, for example, $Ni_2MnGa$, $Fe_2MnSi_{1-x}Ge_x$ with x = 0-1 such as $Fe_2MnSi_{0.5}Ge_{0.5}$, $Ni_{52.9}Mn_{22.4}Ga_{24.7}$, $Ni_{50.9}Mn_{24.7}Ga_{24.4}$, $Ni_{55.2}Mn_{18.6}Ga_{26.2}$, $Ni_{51.6}Mn_{24.7}Ga_{23.8}$, $Ni_{52.7}Mn_{23.9}Ga_{23.4}$, CoMnSb, $CoNb_{0.2}Mn_{0.8}Sb$, $CoNb_{0.4}Mn_{0.6}SB$, $CoNb_{0.6}Mn_{0.4}Sb$, $Ni_{50}Mn_{35}Sn_{15}$, $Ni_{50}Mn_{37}Sn_{13}$.

Additionally suitable are $Fe_{90}Zr_{10}$, $Fe_{82}Mn_8Zr_{10}$, $Co_{66}Nb_9Cu_1Si_{12}B_{12}$, $Pd_{40}Ni_{22.5}Fe_{17.5}P_{20}$, FeMo-SiBCuNb, $Gd_{70}Fe_{30}$, GdNiAl, $NdFe_{12}B_6GdMn_2$.

Manganites of the perovskite type are, for example, $La_{0.6}Ca_{0.4}MnO_3$, $La_{0.67}Ca_{0.33}MnO_3$, $La_{0.8}Ca_{0.2}MnO_3$, $La_{0.7}Ca_{0.3}MnO_3$, $La_{0.958}Li_{0.025}Ti_{0.1}Mn_{0.9}O_3$, $La_{0.65}Ca_{0.35}Ti_{0.1}Mn_{0.9}O_3$, $La_{0.799}Na_{0.199}MnO_{2.97}$, $La_{0.88}Na_{0.099}Mn_{0.977}O_3$, $La_{0.877}K_{0.096}Mn_{0.974}O_3$, $La_{0.65}Sr_{0.35}Mn_{0.95}Cn_{0.05}O_3$, $La_{0.7}Na_{0.2}MnO_3$, $La_{0.5}Ca_{0.3}Sr_{0.2}MnO_3$.

Gd- and Si-based compounds of the general formula (III) are, for example, $Gd_5(Si_{0.5}Ge_{0.5})_4$, $Gd_5(Si_{0.425}Ge_{0.575})_4$, $Gd_5(Si_{0.45}Ge_{0.55})_4$, $Gd_5(Si_{0.365}Ge_{0.635})_4$, $Gd_5(Si_{0.3}Ge_{0.7})_4$, $Gd_5(Si_{0.25}Ge_{0.75})_4$.

Compounds comprising rare earth elements of formula (IV) and (V) are for example $Tb_5Si_4$, $Tb_5(Si_3Ge)$, $Tb(Si_2Ge_2)$, $Tb_5Ge_4$, DyTiGe, HoTiGe, TmTiGe.

Mn- and Sb- or As-based compounds of the general formulae (VI) to (IX) preferably have the definitions of z = 0.05 to 0.3, Z = Cr, Cu, Ge, Co.

The magnetocaloric materials used in accordance with the invention can be produced in any suitable manner.

The magnetocaloric materials are produced, for example, by solid phase reaction of the starting elements or starting alloys for the material in a ball mill, subsequent pressing, sintering and heat treatment under inert gas atmosphere and subsequent slow cooling to room temperature. Such a process is described, for example, in J. Appl. Phys. 99, 2006, 08Q107.

Processing via melt spinning is also possible. This makes possible a more homogeneous element distribution which leads to an improved magnetocaloric effect; cf. Rare Metals, Vol. 25, October 2006, pages 544 to 549. In the process described there, the starting elements are first induction-melted in an argon gas atmosphere and then sprayed in the molten state through a nozzle onto a rotating copper roller. There follows sintering at 1000°C or 1100°C and slow cooling to room temperature. It is also possible to prepare the magnetocaloric materials by gas atomization from the elements or suited compounds of the elements. Subsequently a heat treatment by sintering e.g. at temperatures in the range of 1000 to 1100 °C is carried out followed by cooling to room temperature.

The thermal hysteresis occurring in the magnetocaloric materials can be reduced significantly and a large magnetocaloric effect can be achieved when the metal-based materials are not cooled slowly to ambient temperature after the sintering and/or heat treatment, but rather are quenched at a high cooling rate. This cooling rate is at least 100 K/s. The cooling rate is preferably from 100 to 10 000 K/s, more preferably from 200 to 1300 K/s. Especially preferred cooling rates are from 300 to 1000 K/s.

The individual particles of the magnetocaloric materials may have any desired form. The particles are preferably in spherical form, pellet form, sheet form, wire form, string form, rod form, ellipsoidal form or cylinder form, more preferred in spherical form. The diameter of the magnetocaloric particles, especially of the spheres, is usually 0.1 $\mu$m to 1 mm, preferably 1 $\mu$m to 500 $\mu$m, more preferred 5 $\mu$m to 200 $\mu$m, even more preferred 5 $\mu$m to 150 $\mu$m and most preferred 70 to 150 $\mu$m. Fractions of particles of different ranges of diameters may be prepared via sieving, e.g. particles having a diameter in the range of 70 $\mu$m to 200 $\mu$m or in the range of 100 $\mu$m to 200 $\mu$m or in the range of 100 $\mu$m to 150 $\mu$m. The diameter of the particles may be selected depending on the structure of the shaped body prepared from the particles. Shaped bodies may comprise fine structures such as cooling fins or ribbons or walls between channels provided for the heat transfer medium. Such fine structures are also called micro structure of a shaped body according to the present invention. The thickness of the micro structure of a shaped body, e.g. wall and cooling ribbons or fins determines an optimal diameter of the particles which should be used for the preparation of the shaped body. Preferably the ratio of particle diameter to the thickness of the microstructure of a shaped body is in the range of 1 : 5 to 1 : 10. The magnetocaloric particles, especially spheres, may have a size distribution. A lower diameter, especially sphere diameter, leads to a higher coefficient of heat transfer and hence allows better heat exchange. This, however, is associated with a higher pressure drop through the packed bed. Conversely, the use of larger material particles, especially spheres, leads to slower heat transfer, but to lower pressure drops.

Some magnetocaloric materials may have to be treated thermally to induce or improve the magnetocaloric properties of the magnetocaloric materials, e.g. by sintering, by heat treating and subsequent fast cooling, or by keeping at higher temperatures in hydrogen atmosphere to adjust the hydrogen content in case of the La- and Fe-based compounds of the general formula (II). According to the present invention it is preferred to perform these thermal treatment(s) before the particles are used within the process of the present invention. This means all thermal treatments of the magnetocaloric particles necessary for inducing or improving magnetocaloric properties of the particles are preferably completed before the particles are used, i.e. preferably thermally completely treated particles are used in the process according to the present invention.

In step (c) the particles are at least partially coated with the epoxy resin composition. It might e.g. happen that small agglomerates of magnetocaloric particles are coated together, so not every single particle may be coated completely. Preferably in average at least a quarter of the surface of each particle is coated, more preferred in average at least 50 % of the surface of each particles is coated. Coating of the particles may be performed by any method suited, e.g. by spray coating, fluidized bed coating, dipping the particles in the epoxy resin composition, or by mixing methods like kneading, extruding, pestling, shaking, rotating, tumbling, or stirring the epoxy resin composition together with the magnetocaloric material. Depending on the method applied for coating different epoxy resin compositions may be used, the selection of a suited epoxy resin composition may e.g. depend on the viscosity required in a certain process as known to the person skilled in the art.

The amount of epoxy resin composition applied in the coating step (c) is preferably selected to yield shaped bodies containing 0.1 to 20 Vol.-% cured epoxy resin and 80 to 99.9 Vol.-% solid material, preferably 1 to 15 Vol.-% cured epoxy resin and 85 to 99 Vol.-% solid material and more preferred 4 to 12 Vol.-% cured epoxy resin and 88 to 96 Vol.-% solid material, based on the total volume of the cured epoxy resin and the solid material, wherein any optionally present pre-coating of the particles is included into the volume of the solid material.

Before the coating in step (c) the particles may be pretreated by one or more pretreatments selected from cleaning the surface of the particles, surface treatment and coating of the particles with auxiliary materials. Cleaning of the surface of the particles includes chemical cleaning, e.g. etching the surface, thermal cleaning, photochemically cleaning or degreasing the surface e.g. by cleaning the surface with hot solvent vapor or using ultra sonic. Surface treatment may be atmospheric plasma treatment. The particles may be coated by an adhesion promoter or a corrosion inhibitor, e.g. by applying a thermal and / or photochemically and / or atmospheric crosslinkable conversion coating comprising at least one binder and a phosphinic acid derivative as a corrosion inhibitor.

The coated particles obtained in step (c) are very suitable for the preparation of shaped bodies and constitute an intermediate of the preparation process according to the present invention. They comprise a solid core which is at least partially coated by the epoxy resin composition as described above in detail, wherein the epoxy resin remains essentially uncured. These coated particles can be stored for a long time, e.g. weeks, before being used for the preparation of the shaped bodies. Preferably the coating of the particles is solid at the temperature of storage and/or at the temperature of step (d), i.e. the transfer of the coated particles into the mold, e.g. the epoxy resin coating is solid at room temperature. Particles with a solid coating are often free-flowing which facilitates the handling of the particles and which is particularly advantageous in step (d), e.g. in respect of filling and packing of the particles in the mold. Another object of the present invention are therefore coated particles comprising a core of the solid material as described above including preferred embodiments which is at least partially coated with an epoxy resin composition containing

at least one epoxy resin having at least one epoxy group per molecule;
at least one curing agent selected from cyanoalkylated polyamines of formula (A)

$$A(NH-X-CN)_n \qquad (A),$$

wherein

A is a group selected from aryl, arylalkyl, alkyl, and cycloalkyl, wherein A does not contain a primary amino group,
X is alkylene having 1 to 10 C-atoms, and
$n \geq 2$; and
at least one accelerator selected from tertiary amines, imidazoles, guanidines, urea compounds, and Lewis acids, as described above including preferred embodiments.

Preferably in average at least a quarter of the surface of the particles is coated, more preferred in average at least 50 % of the surface of the particles is coated. The particles preferably contain 0.1 to 20 Vol.-% epoxy resin and 80 to 99.9 Vol.-% solid material, preferably 1 to 15 Vol.-% epoxy resin and 85 to 99 Vol.-% solid material and more preferred 4 to 12 Vol.-% epoxy resin and 88 to 96 Vol.-% solid material, based on the total volume of the epoxy resin and the solid material, wherein any optionally present pre-coating of the particles is included in the volume of the solid material.

In step (d) of the process the coated particles are transferred into a mold. The mold may be permanent, i.e. it is not removed from the shaped body formed by the solid materials and the cured epoxy resin after the curing in step (e). In this case the shaped body is used together with the mold, e.g. in case of magnetocaloric materials they are together placed in a magnetocaloric regenerator. The mold may also be a removable mold, i.e. the shaped body is removed from the mold before the shaped body is used, e.g. in a magnetocaloric regenerator. The mold may have any suitable form and is adopted for the intended use of the shaped body. By way of example the mold may have a rectangular form, a cylindrical form, a ring form or a plate form having spherical or rectangular cross section. Furthermore, the mold may be divided in two or more compartments of equal or different volume and cross section. The walls of the mold may be formed by continuous materials, but it is also possible to use mesh-like materials or a combination of different materials, e.g. of continuous and mesh-like materials. The mold may also be the compression mold.

Since the particles of the solid material are already coated with the epoxy resin composition when the particles are placed in the mold the epoxy resin is already evenly distributed and the resulting shaped body exhibits a uniform distribution of resin and solid material.

The solid particles are usually placed into a suitable mold by pouring, in which case the settling of the particles into a particle bed can be improved by applying mechanical vibrations, e.g. by shaking. The distribution of the solid particles can be further homogenated by suitable tools like a rake, doctor blade, or similar. Floating in a fluid with subsequent settling of the particles is also possible. It is possible to add auxiliaries to improve or facilitate the transfer of the coated particles into the mold like free-flow agents, lubricants, fluids for floating or one or more solid place holder articles. It is also possible to apply pressure to the bed of coated particles placed in the mold. The pressure may be applied to the completely packed mold, to a single layer after placing the layer in the mold or subsequently to each layer after placing it into the mold. The application of pressure may be used to decrease the porosity of the bed to control the porosity and/or to form a smooth surface of a layer of particles before the next layer of particles is placed on top of this layer to obtain a determinate border between two layers of different materials. It is also possible to place spacer between two layers of particles, e.g. a mesh or a perforated plate.

It is possible to prepare the shaped body from one solid material or from two or more different solid materials. It is even possible to prepare shaped bodies comprising a relatively large number of different solid materials in one shaped body. E.g. in magnetocaloric applications a relatively wide temperature range can be exploited by the use of a relatively large number of different magnetocaloric materials. It is possible to use 3 to 100 or 5 to 100 or 10 to 100 different magnetocaloric materials with different Curie temperatures which are placed subsequently in the mold, preferably each material forms a layer and a layered structure of the different magnetocaloric materials employed is obtained. Usually the thickness of the different layers is in the range of 0.1 to 100 mm. Adjacent layers of magnetocaloric materials with different Curie temperatures may be in direct spatial contact with one another or they may have a separation of 0.01 to 1 mm, preferably a separation of 0.01 to 0.3 mm by incorporating a spacer like a mesh. It is e.g. also possible to prepare several shaped bodies in form of plates each comprising a different single magnetocaloric material and to combine them by stacking.

If different magnetocaloric materials are used, they are in each case advantageously arranged by ascending or descending Curie temperature. The difference of the Curie temperature of two adjacent layers of the different materials is preferably in the range of 0.5 to 6 K. Magnetocaloric materials may show thermal hysteresis at the magnetic phase transition. Preferably magnetocaloric materials are used which have a low thermal hysteresis, e.g. of less than 5 K, more preferably of less than 3 K, especially preferred of less than 2 K.

According to one embodiment of the present invention solid place holder particles are placed into the mold together with the coated particles and after curing the epoxy resin in step (e) these solid place holder particles are removed from the shaped bodies by dissolution in a solvent or solvent mixture, by oxidation, by burning off or by thermal evaporation. Solid space holders may be in the form of spheres, cylinders, needles, plates or fine powder and are inter alia used to increase the porosity of the shaped body and/or create flow channels for the heat transfer medium used in the solid regenerator. The solid space holders may be made from inorganic salts such as NaCl and $Na_2CO_3$, organic salts, sugars, polymers, etc. The space holders may be removed by dissolution in water, basic aqueous solution, acetone, toluene or other organic solvents capable of dissolving the material of the space holder but not the cured epoxy resin or the solid material or it may be removed by thermal treatment.

In step (e) the epoxy resin present in the coated particles placed in the mold is cured. The curing is induced by heating the coated particles. Heating of the coated particles may be performed e.g. by heating the mold containing the coated particles or by flushing the mold with hot gas. The temperature used during curing depends inter alia on the respective epoxy resin composition; usually the curing in step (e) is performed at temperatures below 250 °C, preferred below 235 °C and more preferred below 220 °C at normal pressure. Preferably the curing in step (e) is carried out in the temperature range of 40 °C to 220 °C, preferred in the range of 50 °C to 220 °C and most preferred in the range of 60 °C to 220 °C. Depending on the epoxy resin composition and the temperatures used, the curing in step (e) usually takes 10 min to 48 h. Preferably the curing is carried out in inert atmosphere to avoid any deterioration of the solid materials due to the presence of moisture and/or oxygen.

In addition to the curing in step (e) it is possible to conduct annealing of the shaped body obtained in step (e) to complete the crosslinking reaction of the epoxy resin composition and/or to reduce internal stresses within the shaped body. Usually annealing is carried out at a temperature of 120°C to 250°C, preferred of 150°C to 220°C. Usual time spans for annealing are 10 min to 48 h, depending on the dimension of the shaped bodies longer annealing times may be adequate. The process steps of the preparation process and of the materials used therein are adapted to obtain porous shaped bodies having a porosity of 20 to 80 %, preferred 35 to 65 % and more preferred 40 to 60 %, based on the total volume of the shaped body. The porosity is defined as the ratio of the volume of the pores and channels present in the shaped body and the total volume of the shaped body in percent.

The three-dimensional form of the shaped bodies obtained according to the present process can be selected as desired. The shaped bodies may be in form of spheres, pellets, cylinders, hollow spheres, rings, cuboids, cuboids with rounded edges of any radius, any symmetric or non-symmetric part of a cylinder, sphere, ring, etc. which may be used to form a packed bed of a relatively large number of different solid materials shaped bodies. It is also possible to prepare larger shaped bodies, e.g. a shaped body prepared according to the present process may constitute itself a packed bed of particles of the solid material glued together by the cured epoxy resin, e.g. in form of a tube having a rectangular, rectangular with rounded corners, rectangular with one, two, or more edges curved spherical, regular or non-regular polygon, polygon with any edge curved cross section which may be used as regenerator bed. The shaped bodies may also be in form of monolithic blocks having entry and exit orifices for a fluid which are connected by continuous channels which run through the entire monolith. Several shaped bodies may also be combined to yield a larger structure, e.g. the shaped bodies may be in form of plates or sheets and different plates/sheets may be stacked to form a larger structure usable in a regenerator bed or several shaped bodies are combined in a tube bundle in which individual tubes of magnetocaloric material are joined to one another.

Another object of the present invention is the use of an epoxy resin composition as described above in detail including preferred embodiments containing
at least one epoxy resin having at least one epoxy group per molecule;
at least one curing agent selected from cyanoalkylated polyamines of formula (A)

$$A(NH\text{-}X\text{-}CN)_n \qquad (A),$$

wherein

A is a group selected from aryl, arylalkyl, alkyl, and cycloalkyl, wherein A does not contain a primary amino group,
X is alkylene having 1 to 10 C-atoms, and
$n \geq 2$; and
at least one accelerator selected from tertiary amines, imidazoles, guanidines, urea compounds, and Lewis acids;
for the preparation of shaped bodies comprising at least one solid material and the cured epoxy resin.

A further object of the present invention are shaped bodies comprising at least one solid material and a cured epoxy resin wherein the cured epoxy resin is prepared from an epoxy resin composition containing
at least one epoxy resin having at least one epoxy group per molecule;
at least one curing agent selected from cyanoalkylated polyamines of formula (A)

$$A(NH\text{-}X\text{-}CN)_n \qquad (A),$$

wherein

A is a group selected from aryl, arylalkyl, alkyl, and cycloalkyl, wherein A does not contain a primary amino group,
X is alkylene having 1 to 10 C-atoms, and
$n \geq 2$; and
at least one accelerator selected from tertiary amines, imidazoles, guanidines, urea compounds, and Lewis acids,

wherein the shaped body has a porosity of 20 to 80 % based on the total volume of the shaped body. Such shaped bodies are obtainable by the process from the solid materials and the epoxy resin composition as described above in detail including preferred embodiments. The shaped body preferably contains 0.1 to 20 Vol.-% cured epoxy resin and 80 to 99.9 Vol.-% solid material, more preferred 1 to 15 Vol.-% cured epoxy resin and 85 to 99 Vol.-% solid material and most preferred 4 to 12 Vol.-% cured epoxy resin and 88 to 96 Vol.-% solid material, based on the total volume of the cured epoxy resin and the solid material based on the total volume of the cured epoxy resin and the solid material, wherein any optionally present pre-coating of the particles is included into the volume of the solid material. Preferably epoxy resin composition from which the cured epoxy resin is prepared comprises at least one accelerator is selected from tertiary amines, imidazoles, guanidines, and urea compounds. The at least one accelerator is preferably present in the epoxy resin composition in an amount of 1 to 30 wt.%, more preferred in an amount of 1 to 25 wt.-% and in particular preferred in an amount of 3 to 20 wt.-%, based on the total weight of the at least one cyanoalkylated polyamine of formula (A).

The shaped body has a porosity of 20 to 80 %, more preferred 35 to 65 % and most preferred 35 to 60 %, based on the total volume of the shaped body. The porosity is defined as the ratio of the volume of the pores and channels present in the shaped body and the total volume of the shaped body in percent based on the total volume of the shaped body.
Shaped bodies are preferred, wherein the solid material is selected from metals and metal compounds, more preferred wherein solid material is selected from magnetocaloric materials as described above including the preferred magnetocaloric materials.

Shaped bodies according to the present invention wherein the solid material is selected from magnetocaloric materials are suited for the use in magnetocaloric application. Therefore, an additional object of the present invention are cooling devices, climate control units, heat pumps and thermoelectric generators comprising shaped bodies comprising at least one magnetocaloric material and a cured epoxy resin prepared from an epoxy resin composition as described above in detail including preferred embodiments.

The following examples demonstrate the effect of the inventive process and shaped bodies.

Examples:

A) Compounds used

Cyanoethylated Isophorondiamine (Addukt of 2-Propenenitril with 3-Amino-1,5,5-trimethylcyclohexanmethanamine; Baxxodur® PC136, BASF)

Dyhard® UR500 (Mixture of isomers: N,N"-(Methyl-1,3-phenylene)bis[N',N'-dimethylurea] and N,N"-(4-methyl-m-phenylene)bis[N',N'-dimethylurea], Alzchem)

Bisphenol-A-based Epoxy resin (Epilox® A19-03, LEUNA HARZE, EEW 183 g/eq)

Bisphenol-A-based Epoxy resin (Epilox® A50-02, LEUNA HARZE, EEW 495 g/eq)

D.E.N.431 (Epoxy novolac resin EEW 175 g/eq from Dow Chemical)

Epikote® 154 (Polyfunctional epoxy phenol novolac resin EEW 180 g/eq from Hexion)

DICY (Dicyanamide from Alzchem, AHEW 12 g/eq)

Polyetheramine D2000 (BASF)

Triacetonediamin (TAD, BASF)

N-(3-Aminopropyl)imidazol (Lupragen® API, BASF)

Magnetocaloric material $(Mn,Fe)_2(P,As)$ in form of granulates having an average diameter of about 100-200 $\mu$m. The granulates were prepared by ball-milling from the elements followed by cold-isostatic pressing and sintering at 1100°C. They were then granulated using a jaw crusher and sieved to the above-mentioned particle size.

Magnetocaloric material $(Mn,Fe)_2(P,Si)$ in form of spheres having an average diameter of 70-200 $\mu$m. The spheres were prepared by gas atomization from the elements or suited compounds of the elements. Subsequently a heat treatment by sintering e.g. at temperatures in the range of 1000 to 1100 °C is carried out followed by cooling to room temperature. The products were sieved prior to use.

Stainless steel spheres having different ranges of average diameter in the region of 70- 200 $\mu$m.

B) Procedure for coating the particles

1.) A solution of epoxy resin, compound of formula (A), optionally accelerator and/or optional a further additive in a solvent was prepared (adhesive solution). The solutions employed in the examples had a concentration of 9 - 12 weight% adhesive in acetone based on the weight of the total composition. The compositions of the epoxy resin composition used are summarized in Table 1.

2.) The adhesive solution was mixed with the magnetocaloric material until evenly distributed.

3.) The solvent was removed in vacuum.

The coated particles obtained can be stored at ambient temperatures for several weeks.

C) Preparation of shaped bodies

1.) The precoated material was filled into a mold and compacted with a plunger.

2.) The material was then hardened under a defined temperature protocol: heating at a rate of 1K/min to 180°C, hold the temperature for 2h to yield stable sample bodies which can be conducted to further testing. Curing was conducted in air (normal) or in nitrogen or argon atmosphere.

The shaped bodies obtained contained 1.0 to 3.2 wt.-% of cured epoxy resin based on the total weight of magnetocaloric material and cured epoxy resin.

D) Test procedures applied

Porosity measurement

To measure the porosity of the sample pucks a pycnometer has been used. As working liquid, isopropanol has been used assuming a density of 0.789 g/cm3 at room temperature. Cylindrical sample pucks are used for the measurements. First, their height h and diameter d and their dry mass $m_s$ are determined. Then the mass of the pycnometer filled with isopropanol $m_p$ is recorded. Next the sample puck is placed in the pycnometer. Air is removed from open porosity of the sample puck by shaking. The mass of the pycnometer with the sample puck $m_{p,s}$ immersed in isopropanol is determined.

The porosity p is calculated by

$$p = 100\% - [( m_s + m_p - m_{p,s} ) / ( 0.789 \text{ g/cm}^3 * pi*(d/2)^2*h ) ]$$

Pressure drop measurement

The pressure drop has been determined on a sample puck fixed in a sample holder which can be attached to a flow system. The pressure drop has been determined using a flow of 245 L/h of argon gas. The flow system's background pressure does not contribute significantly to the measurement.

Compression Tests

Cylindrical sample pucks with a height h = 10 mm and a diameter d = 16 mm were used for the measurements. Sample pucks were compressed at a rate of 2mm/min with an Instron PM08SK316 (maximum force 100kN; accuracy class 1 according to ISO 7500-1) at 23°C and the forces along the compression direction were recorded (force is perpendicular to the surface of the puck). Prior to the measurements, the sample pucks were exposed to a fluid (water with a corrosion inhibitor) and subsequently transferred to the pressure cell. This method delivers force-distances-curves whereat each curve features a maximum force $F_{max}$ at a certain distance. $F_{max}$ translates to a maximum pressure which each puck is able to withstand. It is a measure for the stability of a puck provided by the epoxy coating. Between 3 and 6 pucks were prepared for each investigated formulation. Table 1B lists the specifications of the samples (used formulation and experimentally determined porosity (mean values)), Table 2 gives the mean pressure values measured according to the aforementioned methodology.

E) Results

Samples 1 to 14 were prepared with $(Mn,Fe)_2(P,As)$ in form of granulates having diameters in the range of 100-200 $\mu$m (Table 1A).

Samples 15 to 27, 30 and 31 were prepared with $(Mn,Fe)_2(P,Si)$ in form of spheres having diameters in the ranges of 70-200 $\mu$m, 100-150 $\mu$m and 100-200 $\mu$m (Tables 1B and 2).

Samples 28 and 29 were prepared with stainless steel spheres having diameters in the ranges of 70-200 $\mu$m and 100-150 $\mu$m (Tables 1B and 2).

Table 1A Compositions, pressure drop and porosity of $(Mn,Fe)_2(P,As)$ samples

| Example | Epoxy formulation | | | | | | | | | | Curing environronment | Pressure drop [mbar] | Porosity [%] |
|---|---|---|---|---|---|---|---|---|---|---|---|---|---|
| | Resin | | Curing agent 1 | | Curing agent 2 | | Accelerator | | solvent | | | | |
| | Name | weight [g] | Name | weight [g] | Name | weight [g] | Name | weight [g] | Name | weight [g] | | | |
| 1 (inventive) | A19-03 | 100 | Baxxodur PC136 | 15 | - | - | UR500 | 3 | Acetone | 1062 | Normal | 20 | 49.5 |
| 2 (inventive) | A19-03 | 100 | Baxxodur PC136 | 15 | - | - | UR500 | 3 | Acetone | 1062 | Nitrogen | 24 | 47.4 |
| 3 (inventive) | A19-03 | 100 | Baxxodur PC136 | 15 | - | - | UR500 | 3 | Acetone | 1062 | Argon | 26 | 49.7 |
| 4 (inventive) | A19-03 | 100 | Baxxodur PC136 | 30 | - | - | UR500 | 3 | Acetone | 1197 | Normal | 26 | 47.3 |
| 5 (inventive) | A19-03 | 100 | Baxxodur PC136 | 14.2 | D2000 | 14.2 | UR500 | 3 | Acetone | 1182.6 | Argon | 22 | 50.2 |
| 6 (inventive) | A19-03 | 100 | Baxxodur PC136 | 14.2 | D2000 | 14.2 | UR500 | 3 | Acetone | 1182.6 | Normal | 32 | 45.1 |
| 7 (inventive) | A19-03 | 100 | Baxxodur PC136 | 14.7 | D2000 | 6.3 | UR500 | 3 | Acetone | 1116 | Normal | 28 | 47.9 |
| 8 (inventive) | A19-03 | 100 | Baxxodur PC136 | 14.9 | D2000 | 1.7 | UR500 | 3 | Acetone | 1076.4 | Argon | 28 | 39.0 |
| 9 (inventive) | A19-03 | 100 | Baxxodur PC136 | 14.9 | D2000 | 1.7 | UR500 | 3 | Acetone | 1076.4 | Normal | 32 | 45.9 |
| 10 (inventive) | A19-03 | 100 | Baxxodur PC136 | 14.3 | TAD | 1.6 | UR500 | 3 | Acetone | 1070.1 | Normal | 30 | 49.7 |
| 11 (inventive) | A19-03 | 100 | Baxxodur PC136 | 15 | - | - | API | 3 | Acetone | 1062 | Normal | 28 | 40.6 |
| 12 (inventive) | A19-03 | 100 | Baxxodur PC136 | 15 | - | - | API | 3 | Acetone | 1062 | Argon | 26 | 45.0 |

| | Epoxy formulation | | | | | | | | | | Curing environment | Pressure drop [mbar] | Porosity [%] |
|---|---|---|---|---|---|---|---|---|---|---|---|---|---|
| Example | Resin | | Curing agent 1 | | Curing agent 2 | | Accelerator | | solvent | | | | |
| | Name | weight [g] | Name | weight [g] | Name | weight [g] | Name | weight [g] | Name | weight [g] | | | |
| 13 (inventive) | A19-03 | 100 | Baxxodur PC136 | 12.5 | TAD | 5.4 | UR500 | 3 | Acetone | 1088.1 | Argon | 26 | 51.3 |
| 14 (inventive) | A19-03 | 100 | Baxxodur PC136 | 12.5 | TAD | 5.4 | UR500 | 3 | Acetone | 1088.1 | Normal | 22 | 42.5 |

Table 1B: Compositions, pressure drop and porosity of $(Mn,Fe)_2(P,Si)$ and stainless steel samples

| Example | Epoxy formulation | | | | | | | | | | Curing environment | Pressure drop [mbar] | Porosity [%] |
| | Resin | | Curing agent 1 | | Curing agent 2 | | Accelerator | | solvent | | | | |
| | Name | weight [g] | Name | weight [g] | Name | weight [g] | Name | weight [g] | Name | weight [g] | | | |
| 15 (inventive) | A50-02 | 100 | Baxxodur PC136 | 15.07 | - | - | UR500 | 4 | Acetone | 1072 | Argon | - | 46.2 |
| 16 (inventive) | A50-02 | 100 | Baxxodur PC136 | 15.07 | - | - | UR500 | 4 | Acetone | 476 | Argon | - | 44.3 |
| 17 (inventive) | A50-02 | 100 | Baxxodur PC136 | 15.07 | - | - | UR500 | 4 | Acetone | 1072 | Argon | 49.6 | 38.5 |
| 18 (inventive) | A50-02 | 100 | Baxxodur PC136 | 15.07 | - | - | UR500 | 4 | Acetone | 1072 | Argon | 47 | 38.0 |
| 19 (inventive) | A50-02 | 100 | Baxxodur PC136 | 15.07 | - | - | UR500 | 4 | Acetone | 1072 | Argon | 44 | 38.4 |
| 20 (inventive) | A50-02 | 100 | Baxxodur PC136 | 15.07 | - | - | UR500 | 4 | Acetone | 1072 | Argon | 59.8 | 39.1 |
| 21 (inventive) | A50-02 | 100 | Baxxodur PC136 | 15.07 | - | - | UR500 | 4 | Acetone | 1072 | Argon | 51.2 | 39.3 |
| 22 (inventive) | A50-02 | 100 | Baxxodur PC136 | 10.04 | - | - | UR500 | 4 | Acetone | 1026 | Argon | - | 43.4 |
| 23 (inventive) | A50-02 | 100 | Baxxodur PC136 | 7.53 | - | - | UR500 | 4 | Acetone | 1004 | Argon | - | 43.3 |
| 24 (inventive) | A50-02 | 100 | Baxxodur PC136 | 6.03 | - | - | UR500 | 4 | Acetone | 990 | Argon | - | 43.2 |
| 25 (inventive) | A50-02 | 100 | Baxxodur PC136 | 5.02 | - | - | UR500 | 4 | Acetone | 981 | Argon | - | 43.4 |
| 26 (inventive) | A50-02 | 100 | Baxxodur PC136 | 15.07 | - | - | UR500 | 4 | Acetone | 1072 | Argon | 42.5 | 42.3 |
| 27 (inventive) | A50-02 | 100 | Baxxodur PC136 | 15.07 | - | - | UR500 | 4 | Acetone | 1072 | Argon | 31.9 | 42.5 |

(continued)

| Example | Epoxy formulation | | | | | | | | | | Curing environment | Pressure drop [mbar] | Porosity [%] |
|---|---|---|---|---|---|---|---|---|---|---|---|---|---|
| | Resin | | Curing agent 1 | | Curing agent 2 | | Accelerator | | solvent | | | | |
| | Name | weight [g] | Name | weight [g] | Name | weight [g] | Name | weight [g] | Name | weight [g] | | | |
| 28 (comparative) | D.E.N.431 | 100 | DICY | 5 | - | - | - | - | Acetone | 945 | Argon | - | 39.7 |
| 29 (comparative) | Epikote 154 | 100 | DICY | 5 | - | - | - | - | Acetone | 945 | Argon | - | 43.6 |

Table 2

| | Solid Material | Particle Size Range | Resin / Curing agent | wt.% Epoxy | Porosity in % | Max. Pressure in MPa |
|---|---|---|---|---|---|---|
| 15 | $(Mn,Fe)_2(P,Si)$ | 100-200 μm | A50-02 / PC136 | 2 | 46.2 | 13.3 |
| 16 | $(Mn,Fe)_2(P,Si)$ | 100-200 μm | A50-02 / PC136 | 2 | 44.3 | 15.1 |
| 17 | $(Mn,Fe)_2(P,Si)$ | 100-150 μm | A50-02 / PC136 | 1 | 38.5 | 11.2 |
| 18 | $(Mn,Fe)_2(P,Si)$ | 100-150 μm | A50-02 / PC136 | 1.5 | 38.0 | 18.2 |
| 19 | $(Mn,Fe)_2(P,Si)$ | 100-150 μm | A50-02 / PC136 | 2 | 38.4 | 20.2 |
| 20 | $(Mn,Fe)_2(P,Si)$ | 70-200 μm | A50-02 / PC136 | 3 | 39.1 | 24.8 |
| 21 | $(Mn,Fe)_2(P,Si)$ | 100-150 μm | A50-02 / PC136 | 3 | 39.3 | 27.3 |
| 22 | $(Mn,Fe)_2(P,Si)$ | 100-200 μm | A50-02 / PC136 | 3 | 43.4 | 15.8 |
| 23 | $(Mn,Fe)_2(P,Si)$ | 100-200 μm | A50-02 / PC136 | 3 | 43.3 | 14.5 |
| 24 | $(Mn,Fe)_2(P,Si)$ | 100-200 μm | A50-02 / PC136 | 3 | 43.2 | 15.2 |
| 25 | $(Mn,Fe)_2(P,Si)$ | 100-200 μm | A50-02 / PC136 | 3 | 43.4 | 15.9 |
| 26 | Stainless Steel Spheres | 70-200 μm | A50-02 / PC136 | 3 | 42.3 | 26.9 |
| 27 | Stainless Steel Spheres | 100-150 μm | A50-02 / PC136 | 3 | 42.5 | 26.4 |
| 28 | $(Mn,Fe)_2(P,Si)$ | 100-200 μm | D.E.N.431 / DICY | 3 | 39.7 | 11.7 |
| 29 | $(Mn,Fe)_2(P,Si)$ | 100-200 μm | Epikote 154 /DICY | 3 | 43.6 | 11.1 |

**Claims**

1. A shaped body comprising at least one solid material and a cured epoxy resin wherein the cured epoxy resin is prepared from an epoxy resin composition containing
at least one epoxy resin having at least one epoxy group per molecule;
at least one curing agent selected from cyanoalkylated polyamines of formula (A)

$$A(NH-X-CN)_n \qquad (A),$$

wherein

A is a group selected from aryl, arylalkyl, alkyl, and cycloalkyl, wherein A does not contain a primary amino group,
X is alkylene having 1 to 10 C-atoms, and
$n \geq 2$; and

at least one accelerator selected from tertiary amines, imidazoles, guanidines, urea compounds, and Lewis acids, wherein the shaped body has a porosity of 20 to 80 % based on the total volume of the shaped body.

2. The shaped body according to claim 1 wherein the shaped body contains 0.1 to 20 Vol.-% cured epoxy resin and 80 to 99.9 Vol.-% solid material, based on the total volume of the cured epoxy resin and the solid material.

3. The shaped body according to any of claims 1 or 2 wherein the solid material is selected from metals and metal compounds.

4. The shaped body according to any of claims 1 to 3 wherein the solid material is selected from magnetocaloric materials.

5. The shaped body according to any of claims 1 to 4 wherein the at least one accelerator is selected from tertiary amines, imidazoles, guanidines, and urea compounds.

6. The shaped body according to any of claims 1 to 5 wherein the epoxy resin composition contains 1 to 30 wt.-% of the at least one accelerator based on the total weight of the at least one cyanoalkylated polyamine of formula (A).

7. A process for preparing a shaped body according to claims 1 to 6 comprising the steps

   (a) providing an epoxy resin composition containing
   at least one epoxy resin having at least one epoxy group per molecule;
   at least one curing agent selected from cyanoalkylated polyamines of formula (A)

   $$A(NH-X-CN)_n \qquad (A),$$

   wherein

      A is a group selected from aryl, arylalkyl, alkyl, and cycloalkyl, wherein A does not contain a primary amino group,
      X is alkylene having 1 to 10 C-atoms, and
      $n \geq 2$; and

      at least one accelerator selected from tertiary amines, imidazoles, guanidines, urea compounds, and Lewis acids;
   (b) providing at least one solid material in form of particles;
   (c) coating the particles at least partially with the epoxy resin composition;
   (d) transferring the coated particles into a mold; and
   (e) curing the epoxy resin.

8. The process according to claim 7 wherein the epoxy resin composition contains further additives selected from catalysts, curing agents, accelerators, lubricants, reactive diluents, corrosion inhibitors, agents for increasing heat conductivity, adhesion promoters, additional curing agents, and stabilizers.

9. The process according to claim 7 or 8, wherein the epoxy resin composition provided in step (a) contains at least one solvent which is removed after step (c) and before the coated particles are transferred into the mold in step (d).

10. The process according to any of claims 7 to 9 wherein the particles provided in step (b) are pretreated before coating the particles in step (c) by one or more pretreatments selected from cleaning the surface of the particles, surface treatment and coating of the particles with auxiliary materials.

11. The process according to any of claims 7 to 10 wherein in step (d) one or more solid place holder articles are placed into the mold together with the coated particles and after curing the epoxy resin in step (e) these solid place holder particles are removed from the shaped body.

12. Use of an epoxy resin composition containing
    at least one epoxy resin having at least one epoxy group per molecule;
    at least one curing agent selected from cyanoalkylated polyamines of formula (A)

    $$A(NH-X-CN)_n \qquad (A),$$

    wherein

       A is a group selected from aryl, arylalkyl, alkyl, and cycloalkyl, wherein A does not contain a primary amino group,
       X is alkylene having 1 to 10 C-atoms, and
       $n \geq 2$; and

    at least one accelerator selected from tertiary amines, imidazoles, guanidines, urea compounds, and Lewis acids;
    for the preparation of shaped bodies comprising at least one solid material and the cured epoxy resin,
    wherein the shaped body has a porosity of 20 to 80 % based on the total volume of the shaped body.

13. Coated particles for the preparation of shaped bodies according to any of claims 1 to 6 wherein the coated particles comprise a core of the solid material which is at least partially coated with an epoxy resin composition containing at least one epoxy resin having at least one epoxy group per molecule;
at least one curing agent selected from cyanoalkylated polyamines of formula (A)

$$A(NH-X-CN)_n \qquad (A),$$

wherein

A is a group selected from aryl, arylalkyl, alkyl, and cycloalkyl, wherein A does not contain a primary amino group,
X is alkylene having 1 to 10 C-atoms, and
$n \geq 2$; and

at least one accelerator selected from tertiary amines, imidazoles, guanidines, urea compounds, and Lewis acids.

14. Cooling devices, climate control units, heat pumps and thermoelectric generators comprising shaped bodies according to claim 4.

**Patentansprüche**

1. Formkörper, umfassend wenigstens ein festes Material und ein gehärtetes Epoxyharz, wobei das gehärtete Epoxyharz aus einer Epoxyharzzusammensetzung hergestellt ist, die enthält:

wenigstens ein Epoxyharz mit wenigstens einer Epoxygruppe pro Molekül;
wenigstens ein Härter ausgewählt aus cyanoalkylierten Polyaminen der Formel (A),

$$A(NH-X-CN)_n \qquad (A),$$

wobei

A eine Gruppe ausgewählt aus Aryl, Arylalkyl, Alkyl und Cycloalkyl ist, wobei A keine primäre Aminogruppe enthält,
X Alkylen mit 1 bis 10 C-Atomen ist und
$n \geq 2$; und

wenigstens einen Beschleuniger ausgewählt aus tertiären Aminen, Imidazolen, Guanidinen, Harnstoffverbindungen und Lewis-Säuren,
wobei der Formkörper eine Porosität von 20 bis 80 % bezogen auf das Gesamtvolumen des Formkörpers aufweist.

2. Formkörper gemäß Anspruch 1, wobei der Formkörper 0,1 bis 20 Vol.-% gehärtetes Epoxyharz und 80 bis 99,9 Vol.-% festes Material bezogen auf das Gesamtvolumen des gehärteten Epoxyharzes und des festen Materials enthält.

3. Formkörper gemäß einem der Ansprüche 1 oder 2, wobei das feste Material ausgewählt ist aus Metallen und Metallverbindungen.

4. Formkörper gemäß einem der Ansprüche 1 bis 3, wobei das feste Material aus magnetokalorischen Materialien ausgewählt ist.

5. Formkörper gemäß einem der Ansprüche 1 bis 4, wobei der wenigstens eine Beschleuniger ausgewählt ist aus tertiären Aminen, Imidazolen, Guanidinen und Harnstoffverbindungen.

6. Formkörper gemäß einem der Ansprüche 1 bis 5, wobei die Epoxyharzzusammensetzung 1 bis 30 Gew.-% an dem wenigstens einen Beschleuniger bezogen auf das Gesamtgewicht des wenigstens einen cyanoalkylierten Polyamins der Formel (A) enthält.

7. Verfahren zum Herstellen eines Formkörpers gemäß Ansprüchen 1 bis 6, umfassend die Schritte

(a) Bereitstellen einer Epoxyharzzusammensetzung, die enthält:

wenigstens ein Epoxyharz mit wenigstens einer Epoxygruppe pro Molekül;
wenigstens ein Härter ausgewählt aus cyanoalkylierten Polyaminen der Formel (A),

$$A(NH-X-CN)_n \qquad (A),$$

wobei

A eine Gruppe ausgewählt aus Aryl, Arylalkyl, Alkyl und Cycloalkyl ist, wobei A keine primäre Aminogruppe enthält,
X Alkylen mit 1 bis 10 C-Atomen ist und
$n \geq 2$; und

wenigstens einen Beschleuniger ausgewählt aus tertiären Aminen, Imidazolen, Guanidinen, Harnstoffverbindungen und Lewis-Säuren;

(b) Bereitstellen wenigstens eines festen Materials in der Form von Partikeln;
(c) wenigstens teilweises Beschichten der Partikel mit der Epoxyharzzusammensetzung;
(d) Überführen der beschichteten Partikel in ein Formwerkzeug; und
(e) Härten des Epoxyharzes.

8. Verfahren gemäß Anspruch 7, wobei die Epoxyharzzusammensetzung weitere Zusatzstoffe ausgewählt aus Katalysatoren, Härtern, Beschleunigern, Gleitmitteln, reaktiven Verdünnungsmitteln, Korrosionshemmern, Mitteln zum Erhöhen der Wärmeleitfähigkeit, Haftförderern, zusätzlichen Härtern und Stabilisatoren umfasst.

9. Verfahren gemäß Anspruch 7 oder 8, wobei die bei Schritt (a) bereitgestellte Epoxyharzzusammensetzung wenigstens ein Lösungsmittel enthält, das nach Schritt (c) und vor dem Überführen der beschichteten Partikel in das Formwerkzeug bei Schritt (d) entfernt wird.

10. Verfahren gemäß einem der Ansprüche 7 bis 9, wobei die bei Schritt (b) erhaltenen Partikel vor dem Beschichten der Partikel bei Schritt (c) durch eine oder mehrere Vorbehandlungen ausgewählt aus Reinigen der Oberfläche der Partikel, Oberflächenbehandlung und Beschichten der Partikel mit Hilfsmaterialien vorbehandelt werden.

11. Verfahren gemäß einem der Ansprüche 7 bis 10, wobei bei Schritt (d) zusammen mit den beschichteten Partikeln ein oder mehrere feste Platzhaltergegenstände in das Formwerkzeug platziert werden und nach dem Härten des Epoxyharzes bei Schritt (e) diese Platzhalterpartikel von dem Formkörper entfernt werden.

12. Verwendung einer Epoxyharzzusammensetzung, die enthält:

wenigstens ein Epoxyharz mit wenigstens einer Epoxygruppe pro Molekül;
wenigstens ein Härter ausgewählt aus cyanoalkylierten Polyaminen der Formel (A),

$$A(NH-X-CN)_n \qquad (A),$$

wobei

A eine Gruppe ausgewählt aus Aryl, Arylalkyl, Alkyl und Cycloalkyl ist, wobei A keine primäre Aminogruppe enthält,
X Alkylen mit 1 bis 10 C-Atomen ist und
$n \geq 2$; und

wenigstens einen Beschleuniger ausgewählt aus tertiären Aminen, Imidazolen, Guanidinen, Harnstoffverbindungen und Lewis-Säuren;
zur Herstellung von Formkörpern, die wenigstens ein festes Material und das gehärtete Epoxyharz umfassen, wobei der Formkörper eine Porosität von 20 bis 80 % bezogen auf das Gesamtvolumen des Formkörpers aufweist.

13. Beschichtete Partikel für die Herstellung von Formkörpern gemäß einem der Ansprüche 1 bis 6, wobei die beschichteten Partikel einen Kern aus dem festen Material umfassen, der wenigstens teilweise mit einer Epoxyharzzusammensetzung beschichtet ist, die enthält:

wenigstens ein Epoxyharz mit wenigstens einer Epoxygruppe pro Molekül;
wenigstens ein Härter ausgewählt aus cyanoalkylierten Polyaminen der Formel (A),

$$A(NH-X-CN)_n \qquad (A),$$

wobei

A eine Gruppe ausgewählt aus Aryl, Arylalkyl, Alkyl und Cycloalkyl ist, wobei A keine primäre Aminogruppe enthält,
X Alkylen mit 1 bis 10 C-Atomen ist und
$n \geq 2$; und

wenigstens einen Beschleuniger ausgewählt aus tertiären Aminen, Imidazolen, Guanidinen, Harnstoffverbindungen und Lewis-Säuren.

14. Kühlvorrichtungen, Klimaanlageneinheiten, Wärmepumpen und thermoelektrische Generatoren, die Formkörper gemäß Anspruch 4 umfassen.

**Revendications**

1. Corps façonné comprenant au moins un matériau solide et une résine époxy durcie dans lequel la résine époxy durcie est préparée à partir d'une composition de résine époxy contenant
au moins une résine époxy ayant au moins un groupe époxy par molécule ;
au moins un agent durcisseur choisi parmi les polyamines cyanoalkylées de formule (A)

$$A(NH-X-CN)_n \qquad (A),$$

dans lesquelles

A est un groupe choisi parmi les groupes aryle, arylalkyle, alkyle et cycloalkyle, A ne contenant pas de groupe amino primaire,
X est un groupe alkylène ayant 1 à 10 atomes de C et
$n \geq 2$ ; et

au moins un accélérateur choisi parmi les amines tertiaires, les imidazoles, les guanidines, les composés de l'urée et les acides de Lewis,
le corps façonné ayant une porosité de 20 à 80 % par rapport au volume total du corps façonné.

2. Corps façonné selon la revendication 1, le corps façonné contenant 0,1 à 20 % en volume de résine époxy durcie et 80 à 99,9 % en volume de matériau solide, par rapport au volume total de la résine époxy durcie et du matériau solide.

3. Corps façonné selon l'une quelconque des revendications 1 ou 2 dans lequel le matériau solide est choisi parmi les métaux et les composés métalliques.

4. Corps façonné selon l'une quelconque des revendications 1 à 3 dans lequel le matériau solide est choisi parmi les matériaux magnétocaloriques.

5. Corps façonné selon l'une quelconque des revendications 1 à 4 dans lequel l'au moins un accélérateur est choisi parmi les amines tertiaires, les imidazoles, les guanidines et les composés de l'urée.

**6.** Corps façonné selon l'une quelconque des revendications 1 à 5 dans lequel la composition de résine époxy contient 1 à 30 % en poids de l'au moins un accélérateur par rapport au poids total de l'au moins une polyamine cyanoalkylée de formule (A).

**7.** Procédé pour la préparation d'un corps façonné selon les revendications 1 à 6 comprenant les étapes

(a) fourniture d'une composition de résine époxy contenant

au moins une résine époxy ayant au moins un groupe époxy par molécule ;
au moins un agent durcisseur choisi parmi les polyamines cyanoalkylées de formule (A)

$$A(NH\text{-}X\text{-}CN)_n \qquad (A),$$

dans lesquelles

A est un groupe choisi parmi les groupes aryle, arylalkyle, alkyle et cycloalkyle, A ne contenant pas de groupe amino primaire,
X est un groupe alkylène ayant 1 à 10 atomes de C et
$n \geq 2$ ; et

au moins un accélérateur choisi parmi les amines tertiaires, les imidazoles, les guanidines, les composés de l'urée et les acides de Lewis ;

(b) fourniture d'au moins un matériau solide sous forme de particules ;
(c) enrobage des particules au moins en partie avec la composition de résine époxy ;
(d) transfert des particules enrobées dans un moule ; et
(e) durcissement de la résine époxy.

**8.** Procédé selon la revendication 7 dans lequel la composition de résine époxy contient d'autres additifs choisis parmi les catalyseurs, les agents durcisseurs, les accélérateurs, les lubrifiants, les diluants réactifs, les inhibiteurs de corrosion, les agents pour l'augmentation de la conductivité thermique, les promoteurs d'adhérence, les agents durcisseurs supplémentaires et les stabilisants.

**9.** Procédé selon la revendication 7 ou 8, dans lequel la composition de résine époxy fournie dans l'étape (a) contient au moins un solvant qui est enlevé après l'étape (c) et avant que les particules enrobées soient transférées dans le moule dans l'étape (d).

**10.** Procédé selon l'une quelconque des revendications 7 à 9 dans lequel les particules fournies dans l'étape (b) sont prétraitées avant enrobage des particules dans l'étape (c) par un ou plusieurs prétraitements choisis entre un nettoyage de la surface des particules, un traitement de surface et un enrobage des particules avec des matériaux auxiliaires.

**11.** Procédé selon l'une quelconque des revendications 7 à 10 dans lequel dans l'étape (d) un ou plusieurs articles de maintien en place solides sont placés dans le moule conjointement avec les particules enrobées et après durcissement de la résine époxy dans l'étape (e) ces particules solides de maintien en place sont enlevées du corps façonné.

**12.** Utilisation d'une composition de résine époxy contenant
au moins une résine époxy ayant au moins un groupe époxy par molécule ;
au moins un agent durcisseur choisi parmi les polyamines cyanoalkylées de formule (A)

$$A(NH\text{-}X\text{-}CN)_n \qquad (A),$$

dans lesquelles

A est un groupe choisi parmi les groupes aryle, arylalkyle, alkyle et cycloalkyle, A ne contenant pas de groupe amino primaire,
X est un groupe alkylène ayant 1 à 10 atomes de C et

$n \geq 2$ ; et

au moins un accélérateur choisi parmi les amines tertiaires, les imidazoles, les guanidines, les composés de l'urée et les acides de Lewis ;

pour la préparation de corps façonnés comprenant au moins un matériau solide et la résine époxy durcie,

le corps façonné ayant une porosité de 20 à 80 % par rapport au volume total du corps façonné.

13. Particules enrobées pour la préparation de corps façonnés selon l'une quelconque des revendications 1 à 6, les particules enrobées comprenant un coeur du matériau solide qui est au moins en partie enrobé d'une composition de résine époxy contenant

au moins une résine époxy ayant au moins un groupe époxy par molécule ;

au moins un agent durcisseur choisi parmi les polyamines cyanoalkylées de formule (A)

$$A(NH\text{-}X\text{-}CN)_n \qquad (A),$$

dans lesquelles

  A        est un groupe choisi parmi les groupes aryle, arylalkyle, alkyle et cycloalkyle, A ne contenant pas de groupe amino primaire,

  X        est un groupe alkylène ayant 1 à 10 atomes de C et

  n        $\geq 2$ ; et

au moins un accélérateur choisi parmi les amines tertiaires, les imidazoles, les guanidines, les composés de l'urée et les acides de Lewis.

14. Dispositifs de refroidissement, unités de climatisation, pompes à chaleur et générateurs thermoélectriques comprenant des corps façonnés selon la revendication 4.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2011117783 A2
- WO 2009133048 A1
- WO 2004068512 A1
- WO 2010053649 A
- DE 2460305 A

- WO 2003012801 A1
- WO 2011111004 A
- WO 2011083446 A
- US 7063754 B2
- US 2010047527 A1

## Non-patent literature cited in the description

- *Nature,* 10 January 2002, vol. 415, 150-152
- Ullmann's Encyclopedia of Technical Chemistry. Wiley-VCH Verlag, 2005
- *Rare Metals,* 2006, vol. 25, 544-549

- *J. Appl. Phys.,* 2006, vol. 99, 08Q107
- *Physica B,* 2003, vol. 327, 431-437
- **KRENKE et al.** *Physical review B,* 2005, vol. 72, 014412
- *Rare Metals,* October 2006, vol. 25, 544-549